(19) Europäisches Patentamt European Patent Office Office européen des brevets

(11) **EP 4 257 944 B1**

(12) **EUROPEAN PATENT SPECIFICATION**

(45) Date of publication and mention
of the grant of the patent:
**09.04.2025 Bulletin 2025/15**

(21) Application number: **21902931.1**

(22) Date of filing: **12.08.2021**

(51) International Patent Classification (IPC):
*G01L 1/00* *(2006.01)*

(52) Cooperative Patent Classification (CPC):
**G01N 3/20; G01L 1/06; G01L 5/0047;**
G01N 2203/0069; G01N 2203/0212;
G01N 2203/0676; Y02P 10/20

(86) International application number:
**PCT/JP2021/029696**

(87) International publication number:
**WO 2022/123825 (16.06.2022 Gazette 2022/24)**

(54) **METHOD OF CALCULATING RESIDUAL STRESS**

VERFAHREN ZUR BERECHNUNG VON RESTSPANNUNG

PROCÉDÉ POUR CALCUL DE CONTRAINTE RÉSIDUELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.12.2020 JP 2020203148**

(43) Date of publication of application:
**11.10.2023 Bulletin 2023/41**

(73) Proprietor: **JFE Steel Corporation
Tokyo 100-0011 (JP)**

(72) Inventors:
• **TAMASHIRO, Fumiaki
Tokyo 100-0011 (JP)**
• **ISHIWATARI, Akinobu
Tokyo 100-0011 (JP)**

(74) Representative: **Grünecker Patent- und
Rechtsanwälte
PartG mbB
Leopoldstraße 4
80802 München (DE)**

(56) References cited:
JP-B1- 5 582 211        KR-A- 20200 103 836
KR-B1- 101 206 851      US-B2- 10 018 522
US-B2- 10 089 422

## Description

Field

The present invention relates to a method of calculating residual stress, and more particularly to a method of calculating residual stress occurring in a metal sheet subjected to plastic deformation.

Background

It is known that residual stress generated in a press forming product (for example, a press forming product for an automobile) affects fatigue life and delayed fracture property of the press forming product. Therefore, grasping the residual stress generated in the press forming product after molding is an important technique in guaranteeing the fatigue life of a product using the press forming product.

In the related art, the residual stress generated in the press forming product has been measured using X-rays or ultrasonic waves and predicted by finite element analysis.

As a technique for measuring the residual stress using X-rays, for example, Patent Literature 1 discloses a technique in which a sample is irradiated with X-rays, diffractive X-rays emitted from the sample are detected, and stress inside the sample is measured in a non-destructive manner based on information on the diffractive X-rays. In addition, as a technique for measuring residual stress using ultrasonic waves, for example, Patent Literature 2 discloses a technique in which ultrasonic waves are generated in a plastically deformed subject to be inspected (for example, a metal sheet or the like), and the residual stress is measured in a non-destructive manner based on sound velocity information on the measured ultrasonic waves.

Furthermore, prediction of the residual stress by the finite element analysis can be performed by generally widely used finite element analysis software. In addition, in the finite element analysis, high accuracy of a material constitutive model has been progressed, and for example, a Y-U model disclosed in Non Patent Literature 1 contributes to high accuracy of spring back analysis which is important for prediction of residual stress. The patent document US 10 089 422 B2 discloses a method of determining residual stress in metal plates.

Citation List

Patent Literature

Patent Literature 1: JP 2002-333409 A
Patent Literature 2: JP 2011-196953 A

Non Patent Literature

Non Patent Literature 1: F. Yoshida and T. Uemori, International Journal of Mechanical Sciences, 45 (2003), 1687-1702.

Summary

Technical Problem

However, the measurement of the residual stress using the X-rays disclosed in Patent Literature 1 and the measurement of the residual stress using the ultrasonic waves disclosed in Patent Literature 2 assume that the sample (metal sheet or the like) is uniform in the region where the X-rays are incident or the ultrasonic waves are generated. A metal sheet (for example, a dual phase (DP) steel sheet or the like) having two or more kinds of phases has a problem in that it is difficult to accurately measure the residual stress.

Further, in the method of predicting the residual stress of the metal sheet by the finite element analysis, input values (shape, material properties, deformation behavior, boundary conditions, or the like) given to the finite element analysis software significantly affect the prediction result of the residual stress. Therefore, in order to accurately predict the residual stress by the finite element analysis, there is a problem in that not only the material properties of the metal sheet but also various input values such as deformation properties of tools which apply plastic deformation to the metal sheet and boundary conditions such as contact conditions and sliding properties between the metal sheet and the tools need to be set to more accurate values. Furthermore, in the case of shear deformation or the like accompanied by failure of the metal sheet, it is necessary to incorporate failure conditions into a finite element analysis model, and there is a problem in that it is significantly difficult to predict the residual stress with high accuracy.

The present invention has been made in view of the above problems, and an object of the present invention is to provide a method of calculating residual stress, the method being capable of accurately and easily calculating residual stress of a metal sheet subjected to plastic deformation.

Solution to Problem

A method of calculating residual stress according to the present invention calculates residual stress of a metal sheet subjected to plastic deformation and includes: a strain history acquisition step of measuring strain of a deformed portion of the metal sheet in a deformation process of plastically deforming the metal sheet and acquiring a strain history of the measured strain; a sequential stress updating step of calculating a stress increment of the deformed portion in the deformation process according to a material constitutive model using an acquired strain increment calculated, by assuming a deformation state of the deformed portion, from the strain history and an assumed strain increment calculated from strain other than the strain from which the strain history is acquired, and sequentially updating stress from a start to an end of deformation of the deformed portion using the calculated stress increment; and a residual stress determination step of determining, as residual stress of the deformed portion, the stress of the deformed portion at the end of the deformation in the deformation process among the stresses sequentially updated in the sequential stress updating step.

In the strain history acquisition step, a strain history of strain in in-plane two directions and in-plane shear strain at the deformed portion may be measured by a digital image correlation method, and these strain histories are acquired.

In the sequential stress updating step, the deformation state may be assumed from the deformation process of the deformed portion, and the assumed strain increment may be calculated based on a plasticity theory in the assumed deformation state.

In the sequential stress updating step, the deformation state of the deformed portion may be assumed by finite element analysis in the deformation process of the metal sheet, and the assumed strain increment may be calculated based on the assumed deformation state. Advantageous Effects of Invention

According to a method of calculating residual stress according to the present invention, it is possible to accurately and easily calculate residual stress generated in a metal sheet subjected to plastic deformation even in the case of a metal sheet having a non-uniform composition or a metal sheet subjected to deformation accompanied by breakage such as fracture or shearing, the metal sheet having a difficulty in predicting its residual stress by finite element analysis.

Brief Description of Drawings

FIG. 1 is a flowchart illustrating a flow of processing in a method of calculating residual stress according to an embodiment of the present invention.
FIG. 2 is a diagram illustrating a roller bending test for plastically deforming a metal sheet in the embodiment.
FIG. 3 is a diagram illustrating an evaluation point position at which a strain history of an edge face at a deformed portion of the metal sheet is acquired and residual stress is calculated in the embodiment.
FIG. 4 is a graph depicting a relationship between strain and calculated stress in a deformation process and a result of residual stress at the end of deformation in the embodiment.

Description of Embodiments

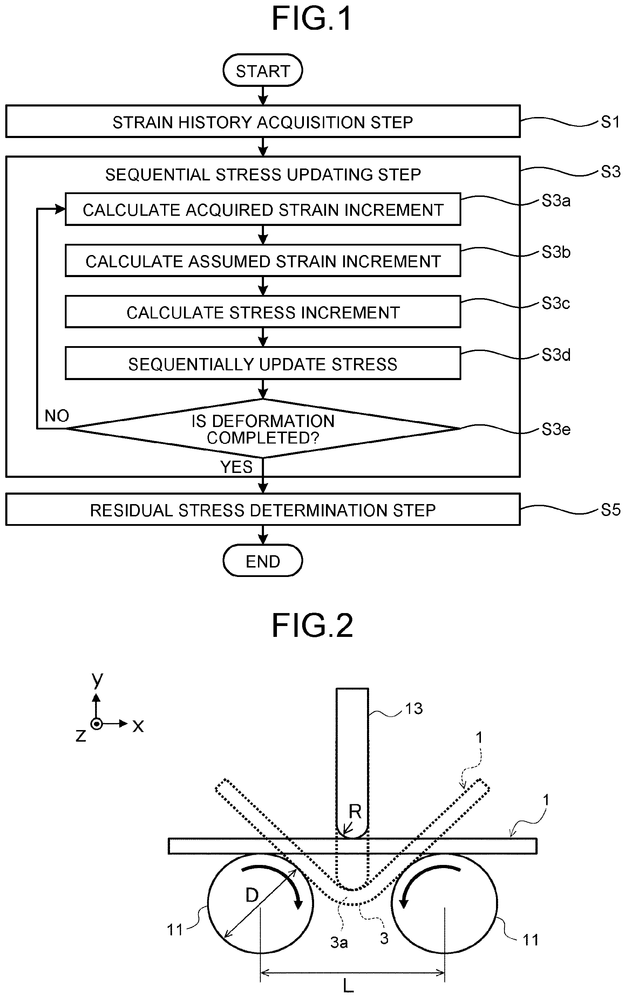

A method of calculating residual stress according to an embodiment of the present invention calculates residual stress of a metal sheet subjected to plastic deformation, and includes a strain history acquisition step S1, a sequential stress updating step S3, and a residual stress determination step S5 as illustrated in FIG. 1. Each of these steps will be described below with reference to FIG. 1.

<Strain history acquisition step>

The strain history acquisition step S1 is a step of measuring strain of a metal sheet in a deformation process of plastically deforming the metal sheet and acquiring a strain history of the measured strain.

Here, a deformed portion of the metal sheet refers to a portion plastically deformed in the deformation process of the metal sheet. Then, in the present embodiment, two cameras are installed at positions where the surface of the deformed portion of the metal sheet can be photographed, and a strain history of the surface of the deformed portion in the deformation process is acquired by a digital image correlation method (hereinafter referred to as "DIC").

In the acquisition of the strain history by the DIC, the surface of the deformed portion of the metal sheet in the deformation process is imaged at predetermined time intervals, and the images captured in each time step are subjected to image analysis to measure strain in in-plane two directions and in-plane shear strain at a predetermined position on the surface of the deformed portion. As a result, it is possible to acquire the strain history of each of the strain in the in-plane two directions and the in-plane shear strain from the start to the end of deformation in the deformation process.

The acquisition of the strain history in the strain history acquisition step is not limited to be performed by the DIC, and a strain gauge may be attached to the surface of the deformed portion of the metal sheet to acquire the strain history of the surface of the deformed portion in the deformation process.

<Sequential stress updating step>

The sequential stress updating step S3 is a step of calculating a stress increment of the deformed portion in the deformation process according to a material constitutive model using an acquired strain increment calculated from the strain history acquired in the strain history acquisition step S1 and an assumed strain increment calculated, by assuming the deformation state of the deformed portion, from strain other than the strain from which the strain history is acquired, and sequentially updating the stress from the start to the end of the deformation of the deformed portion using the calculated stress increment. Specific processing in the sequential stress updating step S3 is performed as follows.

<<Calculation of acquired strain increment>>

First, an acquired strain increment is calculated from the strain history acquired in the strain history acquisition step S1 (S3a).

For example, when the strain history is acquired by the DIC in the strain history acquisition step S1, the acquired strain increment is a strain increment of each of the strain in the in-plane two directions and the in-plane shear strain.

The acquired strain increment is calculated at each time step in the deformation process. The acquired strain increment at each time step can be calculated from, for example, each strain at time steps and before and after the time step.

<<Calculation of assumed strain increment>>

Next, an assumed strain increment is calculated (S3b). The assumed strain increment is a strain increment of strain other than the strain from which the strain history is acquired in the strain history acquisition step. Then, the strain other than the strain from which the strain history is acquired is obtained based on plasticity theory in the assumed deformation state assuming the deformation state from the deformation process of the deformed portion.

As described above, in the case of acquiring the strain history of the surface of the deformed portion of the metal sheet by the DIC in the strain history acquisition step S1, in each time step in the deformation process, three-component strains of strains $\varepsilon_x$ and $\varepsilon_y$ in the in-plane two directions (x direction and y direction) of the surface of the metal sheet and the in-plane (xy plane) shear strain $\varepsilon_{xy}$ are measured. However, strains ($\varepsilon_x$, $\varepsilon_y$, $\varepsilon_2$, $\varepsilon_{xy}$, $\varepsilon_{yz}$, $\varepsilon_{zx}$) of six components including not only the in-plane direction but also the out-plane direction (z direction) are generated in the deformed portion of the metal sheet.

In general, since the surface of the metal sheet in the deformation process is a free surface, no stress is generated in the direction perpendicular to the surface of the metal sheet. That is, the deformation state of the deformed portion of the metal sheet can be assumed as a plane stress state.

Then, based on the plasticity theory in the assumed deformation state, an Equation for giving a stress increment in the out-plane direction by strains ($\varepsilon_x$, $\varepsilon_y$ and $\varepsilon_{xy}$) known by measurement and unknown strains ($\varepsilon_z$, $\varepsilon_{yz}$, and $\varepsilon_{zx}$) including an out-plane direction is obtained.

Here, assuming that the deformation state of the deformed portion is a plane stress state, the stress increment in the out-plane direction is zero, so that the strain ($\varepsilon_z$) in the out-plane direction can be uniquely obtained using equation of the strain and the stress increment based on the plasticity theory.

That is, assuming the deformation state of the deformed portion of the metal sheet from the deformation process of the metal sheet, the strain other than the strain from which the strain history is acquired in the strain history acquisition step S1 can be obtained based on the plasticity theory in the assumed deformation state.

In this manner, at each time step in the deformation process, the strain other than the strain from which the strain history is acquired is obtained. Then, similarly to the acquired strain increment described above, the assumed strain increment is calculated from the strain obtained at each time step in the deformation process. The assumed strain increment at each time step can be calculated, for example, from the strain obtained at the time step and a time step before the above-mentioned time step.

It is noted that the calculation of the assumed strain increment (S3b) is not limited to the calculation from the strain obtained by assuming the deformation state as described above, and includes a case where a value of the assumed strain increment is given based on another assumed deformation state.

<<Stress increment calculation>>

Subsequently, the stress increment of the deformed portion in the deformation process is calculated using the acquired strain increment and the assumed strain increment (S3c). A material constitutive model based on elasto-plastic mechanics can be used to calculate the stress increment, and the strain increment (the acquired strain increment and the assumed strain increment) and the stress increment are represented by a relationship shown in Equation (1).

$$\dot{\sigma} = \boldsymbol{C}^{ep} : \boldsymbol{D} \qquad (1)$$

Here,

$\dot{\sigma}$ : stress increment tensor
$C^e$ : elasto-plastic coefficient tensor
$D$ : strain increment tensor

The elasto-plastic coefficient tensor C$^{ep}$ in Equation (1) can be given by Equation (2).

$$\boldsymbol{C}^{ep} = \boldsymbol{C}^e - \frac{(\boldsymbol{C}^e : \boldsymbol{r}) \otimes \left(\frac{\partial f}{\partial \boldsymbol{\sigma}} : \boldsymbol{C}^e\right)}{-\frac{\partial f}{\partial \boldsymbol{q}} \cdot \boldsymbol{h} + \frac{\partial f}{\partial \boldsymbol{\sigma}} : \boldsymbol{C}^e : \boldsymbol{r}} \qquad (2)$$

**Here,**

$C^e$ : elasto coefficient tensor
$f$ : yield function
$r$ : plastic flow direction tensor
$q$ : internal variable tensor
(equivalent plastic strain, back stress tensor, or the like)
$h$ : function ($\dot{q} = \lambda h(\sigma, q)$) representing increment of internal variable tensor
$\lambda$: plastic multiplier

In the present embodiment, as an example of the material constitutive model, the stress increment is calculated from the strain increment based on the material constitutive model (Y-U model) disclosed in Non Patent Literature 1 capable of reproducing the Bauschinger effect with high accuracy. The Y-U model can be classified into a two-surface model in which a yield surface moves in a bounding surface, and development of the bounding surface (center $\beta$, radius R) and the yield surface (center $\alpha$, radius Y) is defined by the following Equation (3) by strain increment.

$$\boldsymbol{\alpha}^* = \boldsymbol{\alpha} - \boldsymbol{\beta}$$

$$\dot{\boldsymbol{\alpha}}^* = C\left\{\left(\frac{a}{Y}\right)(\boldsymbol{\sigma} - \boldsymbol{\alpha}) - \sqrt{\frac{a}{\overline{\boldsymbol{\alpha}}^*}}\,\boldsymbol{\alpha}^*\right\}\dot{\bar{\varepsilon}}$$

$$\dot{\boldsymbol{\beta}} = m\left\{\left(\frac{b}{Y}\right)(\boldsymbol{\sigma} - \boldsymbol{\alpha}) - \boldsymbol{\beta}\right\}\dot{\bar{\varepsilon}} \qquad (3)$$

$$\dot{R} = m(R_{sat} - R)\dot{\bar{\varepsilon}}$$

$$a = a_0 + R$$

Here, $Y, \alpha_0, C, b, m,$ and $R_{sat}$ are material constants
At this time, Equation (2) is represented by Equation (4).

$$C^{ep} = C^e - \frac{\left(C^e : \frac{\partial f}{\partial \sigma}\right) \otimes \left(\frac{\partial f}{\partial \sigma} : C^e\right)}{\frac{\partial f}{\partial \sigma} \cdot \left[C\left\{\left(\frac{a}{Y}\right)(\sigma - \alpha) - \sqrt{\frac{a}{\alpha^*}}\alpha^*\right\} + m\left\{\left(\frac{b}{Y}\right)(\sigma - \alpha) - \beta\right\}\right] + \frac{\partial f}{\partial \sigma} : C^e : \frac{\partial f}{\partial \sigma}} \tag{4}$$

As described above, when the strain increment is clear, the stress increment is obtained according to the material constitutive model. In the Y-U model, since the stress-strain relationship is defined by a velocity system, in the case of non-linear deformation, an error occurs in the stress increment unless the strain increment is sufficiently reduced. Therefore, the strain increment is preferably $10^{-6}$ or less.

Additionally, the material constitutive model is not limited to the Y-U model described above, and the elasto-plastic coefficient tensor may be calculated according to any material constitutive model. For example, when a material constitutive model assuming isotropic hardening is used instead of the Y-U model, the elasto-plastic coefficient tensor $C^{ep}$ is represented by Equation (5).

$$C^{ep} = C^e - \frac{\left(C^e : \frac{\partial f}{\partial \sigma}\right) \otimes \left(\frac{\partial f}{\partial \sigma} : C^e\right)}{H' + \frac{\partial f}{\partial \sigma} : C^e : \frac{\partial f}{\partial \sigma}} \tag{5}$$

Here, $H$: function ($\overline{\sigma} = H(\overline{\varepsilon^P})$) representing a relationship between equivalent stress $\overline{\sigma}$ and equivalent plastic strain EP in uniaxial tensile test

In addition, as a yield function f used to give the elasto-plastic coefficient tensor $C^{ep}$, not only a yield function of von Mises that is isotropic, but also any yield function such as Hill' 48 or Yld 2000-2d capable of representing anisotropy of a material (metal sheet) with high accuracy can be used.

<<Sequential stress update>>

After the stress increment at each time step in the deformation process is calculated (S3c), the stress at the deformed portion at each time step is sequentially updated (S3d). Then, it is determined whether or not the deformation of the deformed portion has ended, that is, whether or not there is a next time step before the deformation of the deformed portion ends (S3e), and when it is determined that there is the next time step without ending the deformation, the assumption of the deformation state (S3a), the calculation of the strain increment (S3b), the calculation of the stress increment (S3c), and the sequential update of the stress (S3d) are repeatedly executed until it is determined that there is no next time step.

<Residual stress determination step>

The residual stress determination step S5 is a step of obtaining the stress at the end of deformation in the deformation process among the stresses sequentially updated in the sequential stress updating step S3 as the residual stress of the deformed portion.

As described above, according to the method of calculating the residual stress according to the present embodiment, the residual stress of the metal sheet subjected to plastic deformation can be accurately calculated by acquiring the strain history of the deformed portion in the deformation process of plastically deforming the metal sheet.

The method of calculating the residual stress according to the present embodiment calculates the residual stress by acquiring the strain history of the surface of the metal sheet, thereby making it possible to accurately calculate the residual stress even for a non-uniform metal sheet having two or more types of phases, which has been a problem in the measurement of the residual stress using X-rays or ultrasonic waves as in the related art.

Furthermore, as described above, a significant calculation time is required to predict the residual stress with high accuracy in the finite element analysis, or it is difficult to perform analysis in a case where breakage such as fracture or shearing occurs, whereas, in the method of calculating the residual stress according to the present embodiment, the residual stress can be easily calculated by acquiring the strain history in the deformation process of the metal sheet actually subjected to plastic deformation.

In particular, since the metal sheet subjected to plastic deformation is often fractured from the edge face of the metal sheet, it is important to accurately obtain the residual stress of the edge face of the metal sheet in order to grasp the fatigue life and delayed fracture property. According to the method of the present invention, since the strain history of the edge face of the metal sheet in the deformation process of plastically deforming the metal sheet can be easily measured, the residual stress of the edge face of the metal sheet can be accurately calculated.

In the above description, although the deformation state is assumed from the deformation process of the deformed portion in the metal sheet, in the present invention, the finite element analysis of the process of plastic deformation of the metal sheet is performed, and the deformation state (for example, a strain ratio) of the deformed portion may be assumed from the result. In this case, it is not necessary to perform the finite element analysis on the entire metal sheet including the deformed portion as an analysis target, and the finite element analysis may be performed by modeling only the deformed portion for calculating the residual stress and the vicinity thereof.

As a result, according to the present invention, it is not necessary to perform the finite element analysis on the entire metal sheet including the deformed portion, thereby making it possible to calculate the residual stress of the deformed portion in a shorter time as compared with a case where the residual stress is predicted by performing the finite element analysis on the entire metal sheet serving as an analysis target.

In particular, the finite element analysis using a solid element in which the stress in the sheet thickness direction can be calculated with high accuracy is hardly used for press forming analysis of a general press forming product because the calculation time significantly increases. However, if a part of the metal sheet including the deformed portion is to be analyzed, the deformation state of the deformed portion can be predicted in a short time and with high accuracy even if a solid element is used. Therefore, in the present invention, it is possible to calculate the residual stress with higher accuracy by assuming the predicted deformation state by the finite element analysis using the solid element and combining the acquisition of the strain history in the deformation process.

In order to calculate the strain increment and the stress increment using the acquired strain history in the sequential stress updating step subsequent to the strain history acquisition step, as described above, the value of the strain increment is preferably small ($10^{-6}$ or less). Therefore, it is preferable that the time interval at which the strain history is acquired in the strain history acquisition step is shorter.

When the strain history is acquired by capturing an image of the deformed portion using a general camera in the DIC, it is also conceivable that the time interval for capturing an image is about one second. In such a case, since it is possible to obtain a strain value between consecutive time steps by interpolating the strain values measured at the consecutive time steps, the strain history may be acquired at predetermined time intervals.

The strain history acquired in the strain history acquisition step is considered to include measurement noise. Therefore, when the stress increment is calculated using the minute strain increment (acquired strain increment) calculated from the strain history in the sequential stress updating step, the influence of the measurement noise of the strain history on the stress increment increases, and the accuracy of the calculated residual stress may decrease. In such a case, it is preferable to smooth the strain history by a low pass filter or the like for noise removal, thereby making it possible to calculate the residual stress with high accuracy.

[Embodiment]

Since operation and effect of the method of calculating residual stress according to the present invention have been verified, the operation and effect will be described below.

In the embodiment, the residual stress obtained by the method of the present invention and the error thereof were calculated based on the residual stress calculated by the finite element method capable of obtaining the residual stress with high accuracy. In the method of the present invention, as illustrated in FIG. 2, a metal sheet 1 was plastically deformed by a roller bending test, and the residual stress of an edge face 3a in a deformed portion 3 of the metal sheet 1 was calculated.

First, a pair of left and right rollers 11 having a diameter (D) of 20 mm were installed at a center-to-center distance (L) of 35 mm, and the metal sheet 1 was placed on the upper surface of the roller 11. Here, the roller 11 is provided with a mechanism that smoothly rotates following deformation of the metal sheet 1.

Next, using a punch 13 having a tip radius (R) of 3 mm, the punch 13 was pushed by 10 mm at a speed of 10 mm/min. Thereafter, the load was removed until the punch 13 and the metal sheet 1 were separated, bending deformation was applied to the deformed portion 3 of the metal sheet 1, and the strain history of the edge face 3a of the deformed portion 3 in the deformation process of plastically deforming the metal sheet 1 was acquired.

In this embodiment, strain histories of strain in the in-plane two directions (x direction and y direction in FIG. 2) and in-plane (xy plane in FIG. 2) shear strain of the edge face 3a of the deformed portion 3 of the metal sheet 1 were acquired by DIC.

Next, the stress increment of the deformed portion 3 in the deformation process was calculated using the acquired strain increment calculated from the acquired strain history and the assumed strain increment calculated by assuming the deformation state of the deformed portion.

Subsequently, the stress of the deformed portion was sequentially updated using the calculated stress increment, and the stress of the deformed portion 3 at the end of deformation was determined as the residual stress.

In the calculation of the stress increment of the deformed portion 3 in the deformation process, in the present embodiment, a plane stress state, a uniaxial stress state, or a constant strain ratio is assumed as the deformation state of the deformed portion 3.

In the plane stress state, the stress in the out-plane direction (z direction in FIG. 2) was set to 0, and the stress increment was calculated by Equations (1) and (4) shown in the above-described embodiment.

The uniaxial stress state was a state in which stress was loaded in one direction (x direction) in the plane, and the stress in each of the in-plane direction (y direction) and the out-plane direction (z direction) was zero, thereby calculating the stress increment from Equations (1) and (4).

In the "constant strain ratio", it is assumed that the ratio ($\varepsilon_z/\varepsilon_x$) of the strain in the in-plane direction (x direction) to the strain in the out-plane direction (z direction) is constant, and the stress increment is calculated by Equations (1) and (4).

In addition, in calculating the stress increment from the strain increment using Equations (1) and (4), the yield function f in Equation (4) was given a yield function of isotropic von Mises.

In this embodiment, as shown in Table 1, the residual stress generated by the roller bending test was calculated for conditions 1 to 7 in which the material of the metal sheet, the evaluation point position of the residual stress, and the assumption of the deformation state were changed.

Table 1

| Conditions | Material | | Evaluation point position | Assumption of deformation state | Residual stress calculated by finite element analysis (MPa) | Residual stress calculated by present invention (MPa) | Error (%) |
| | Steel sheet | Material tensile strength (MPa-grade) | | | | | |
|---|---|---|---|---|---|---|---|
| Condition 1 | Hot | 980 | P | Plane stress | -553 | -476 | 13.9 |
| Condition 2 | Cold | 1470 | P | Plane stress | -607 | -604 | 0.5 |
| Condition 3 | Hot | 590 | P | Plane stress | -252 | -288 | 14.3 |
| Condition 4 | Hot | 980 | Q | Plane stress | 135 | 155 | 14.8 |
| Condition 5 | Hot | 980 | R | Plane stress | -676 | -414 | 38.8 |
| Condition 6 | Hot | 980 | P | Uniaxial stress | -553 | -331 | 40.1 |
| Condition 7 | Hot | 980 | P | Constant strain ratio | -553 | -527 | 4.7 |
| Hot: Hot-rolled steel sheet, Cold: Cold-rolled steel sheet | | | | | | | |

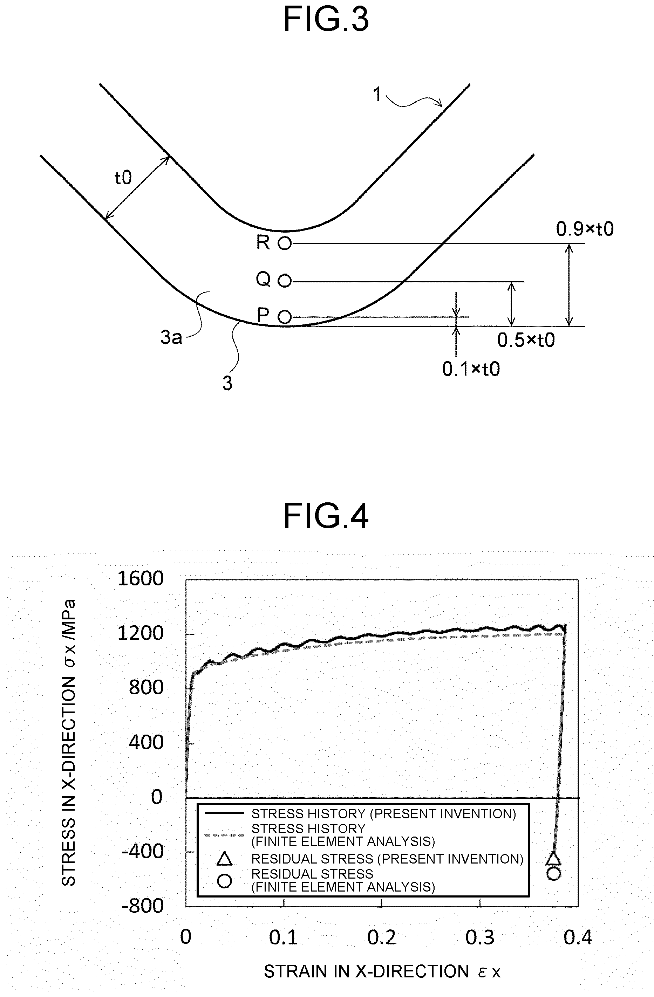

In Table 1, the materials are obtained by changing the material strength and thickness of the metal sheet, 980 is a hot-rolled steel sheet (sheet thickness of 2.9 mm) having a tensile strength of 980 MPa-grade, 590 is a hot-rolled steel sheet (sheet thickness of 1.6 mm) having a tensile strength of 590 MPa-grade, and 1470 is a cold-rolled steel sheet (sheet thickness of 1.2 mm) having a tensile strength of 1470 MPa-grade. In addition, the evaluation point positions in Table 1 are positions of P, Q, and R on the edge face 3a of the metal sheet 1 illustrated in FIG. 3 when the sheet thickness is t0. The evaluation point position P is located on the bending outer side (position of $0.1 \times t0$ from the bending outermost surface), the evaluation point position Q is located at the bending center (position of $0.5 \times t0$ from the bending outermost surface), and the evaluation point position R is located at the bending inner side (position of $0.9 \times t0$ from the bending outermost surface). Furthermore, the assumption of the deformation state in Table 1 is the deformation state of the deformed portion assumed in the calculation of the residual stress.

As an example, for the condition 1 shown in Table 1, FIG. 4 depicts a relationship between the strain of the deformed portion 3 and the calculated stress in the deformation process of the metal sheet 1 bent and deformed by the roller bending test (FIG. 2), and a result (solid line) of the residual stress at the end of deformation.

Further, for comparison, FIG. 4 also illustrates a relationship between strain and stress in the deformation process of the metal sheet 1 obtained by performing the finite element analysis of the roller bending test of the metal sheet 1 and a result (dotted line) of the residual stress at the end of deformation. In order to reproduce the deformation process of the metal sheet 1 by the roller bending test with high accuracy in the finite element analysis, a sufficiently small solid element (element size: about 0.15 mm) was used.

In FIG. 4, it can be seen that the relationship between the strain and the stress and the residual stress calculated according to the present invention substantially coincide with the results obtained by the finite element analysis.

The results of calculating the residual stress of the edge face 3a of the deformed portion 3 for the conditions 1 to 7 in which the material of the metal sheet 1, the evaluation point position of the residual stress, and the assumption of the deformation state are changed are shown in Table 1 described above. The results of calculating the residual stress by the finite element analysis for each condition in Table 1 are also shown in Table 1.

From the results of the conditions 1 to 3 in which the material of the metal sheet 1 was changed, it can be seen that the present invention can accurately calculate the residual stress regardless of the material strength and the thickness of the metal sheet.

From the results of the condition 1, the condition 4, and the condition 5 in which the evaluation point position in the deformed portion 3 is changed, it is found out that the residual stress on the bending outer side and the bending center of the edge face 3a of the deformed portion 3 can be accurately calculated. It is found out that the method of the present invention is effective because fatigue failure is likely to occur from the bending outer side where tensile stress remains.

In the case of comparison among the condition 1, the condition 6, and the condition 7 in which the assumption of the deformation state was changed, there was a difference in the calculated residual stress value.

The condition 1 assumed the plane stress state as the deformation state of the deformed portion 3, and the same was obtained by acquiring strain histories of the strain in the in-plane two directions and the in-plane shear strain. On the other hand, the condition 6 assumed the uniaxial stress state as the deformation state of the deformed portion 3, and the same was obtained by acquiring the strain history in only one in-plane direction (x direction).

The result of the present invention under the condition 6 assuming the uniaxial stress state is less accurate than the result of the present invention under the condition 1 assuming the plane stress state. When the assumption of the uniaxial stress state is established from the deformation process of the deformed portion 3, the strain history of the strain in the in-plane two directions and the strain history of the in-plane shear strain are not acquired by DIC, but only the strain history of the strain in one in-plane direction may be acquired using a general uniaxial strain gauge.

Further, the condition 7 assumed that the strain ratio in the deformation process of the deformed portion 3 is constant. In assuming the constant strain ratio, the finite element analysis of the roller bending test of the metal sheet 1 was performed, and a result indicating that the ratio of the strain in the in-plane direction (x direction) to the strain in the out-plane direction (z direction) on the edge face 3a of the deformed portion 3 was approximately $\varepsilon_z/\varepsilon_x$ = -0.5 was obtained. Then, based on the result, the constant strain ratio ($\varepsilon_z/\varepsilon_x$ = -0.5) was assumed as the deformation state of the deformed portion 3.

From Table 1, the residual stress calculated under the condition 7 has a smaller difference from the finite element analysis result than the residual stress calculated under the condition 1 assuming the plane stress state, and the residual stress could be calculated with higher accuracy.

From the above description, according to the present invention, it has been shown that the residual stress of the metal sheet subjected to plastic deformation can be calculated accurately and easily in a short time.

Industrial Applicability

According to the present invention, it is possible to provide a method of calculating residual stress, the method accurately and easily calculating residual stress of a metal sheet subjected to plastic deformation.

Reference Signs List

1　METAL SHEET

3　DEFORMED PORTION

3a　EDGE FACE

11　ROLLER

13　PUNCH

**Claims**

1. A method of calculating residual stress, the method calculating residual stress of a metal sheet subjected to plastic deformation and comprising:

    a strain history acquisition step of measuring strain of a deformed portion of the metal sheet in a deformation process of plastically deforming the metal sheet and acquiring a strain history of the measured strain, **characterised in that** it is further comprising:

a sequential stress updating step of calculating a stress increment of the deformed portion in the deformation process according to a material constitutive model using an acquired strain increment calculated from the strain history and an assumed strain increment calculated, by assuming a deformation state of the deformed portion, from strain other than the strain from which the strain history is acquired, and sequentially updating stress from a start to an end of deformation of the deformed portion using the calculated stress increment; and a residual stress determination step of determining, as residual stress of the deformed portion, the stress of the deformed portion at the end of the deformation in the deformation process among the stresses sequentially updated in the sequential stress updating step.

2. The method of calculating the residual stress according to claim 1, wherein, in the strain history acquisition step, a strain history of strain in in-plane two directions and in-plane shear strain at the deformed portion are measured by a digital image correlation method, and these strain histories are acquired.

3. The method of calculating the residual stress according to claim 1 or 2, wherein, in the sequential stress updating step, the deformation state of the deformed portion is assumed from the deformation process of the deformed portion, and the assumed strain increment is calculated based on a plasticity theory in the assumed deformation state.

4. The method of calculating the residual stress according to claim 1 or 2, wherein, in the sequential stress updating step, the deformation state of the deformed portion is assumed by finite element analysis in the deformation process of the metal sheet, and the assumed strain increment is calculated based on the assumed deformation state.


**Patentansprüche**

1. Verfahren zur Berechnung von Restspannung, wobei das Verfahren die Restspannung eines Metallblechs berechnet, das einer plastischen Verformung unterzogen wird, und Folgendes umfasst:

einen Schritt zur Erfassung der Dehnungshistorie, bei dem die Dehnung eines verformten Abschnitts des Metallblechs in einem Verformungsprozess der plastischen Verformung des Metallblechs gemessen wird und eine Dehnungshistorie der gemessenen Dehnung erfasst wird,
**dadurch gekennzeichnet, dass** es ferner Folgendes umfasst:

einen Schritt der sequentiellen Spannungsaktualisierung, bei dem ein Spannungsinkrement des verformten Abschnitts in dem Verformungsprozess gemäß einem Materialkonstitutivmodell unter Verwendung eines erfassten Dehnungsinkrements, das aus der Dehnungshistorie berechnet wird, und eines angenommenen Dehnungsinkrements, das durch Annahme eines Verformungszustands des verformten Abschnitts aus einer anderen Dehnung als der Dehnung, aus der die Dehnungshistorie erfasst wird, berechnet wird, und die Spannung von einem Anfang bis zu einem Ende der Verformung des verformten Abschnitts unter Verwendung des berechneten Spannungsinkrements sequentiell aktualisiert wird; und
einen Restspannungs-Bestimmungsschritt, bei dem als Restspannung des verformten Abschnitts die Spannung des verformten Abschnitts am Ende der Verformung im Verformungsprozess unter den Spannungen bestimmt wird, die nacheinander im Schritt der sequenziellen Spannungsaktualisierung aktualisiert werden.

2. Verfahren zur Berechnung der Restspannung gemäß Anspruch 1, wobei im Schritt der Erfassung der Dehnungshistorie eine Dehnungshistorie der Dehnung in zwei Richtungen in der Ebene und der Scherung in der Ebene am verformten Abschnitt durch ein digitales Bildkorrelationsverfahren gemessen wird und diese Dehnungshistorien erfasst werden.

3. Verfahren zur Berechnung der Restspannung gemäß Anspruch 1 oder 2, wobei in dem Schritt der sequentiellen Spannungsaktualisierung der Verformungszustand aus dem Verformungsprozess des verformten Abschnitts angenommen wird und das angenommene Dehnungsinkrement auf der Grundlage einer Plastizitätstheorie in dem angenommenen Verformungszustand berechnet wird.

4. Verfahren zur Berechnung der Restspannung gemäß Anspruch 1 oder 2, wobei im Schritt der sequentiellen Spannungsaktualisierung der Verformungszustand des verformten Abschnitts durch eine Finite-Elemente-Analyse im Verformungsprozess des Metallblechs angenommen wird und das angenommene Dehnungsinkrement auf der Grundlage des angenommenen Verformungszustands berechnet wird.

**Revendications**

1. Procédé de calcul de contrainte résiduelle, le procédé calculant la contrainte résiduelle d'une tôle métallique soumise à une déformation plastique et comprenant :

   une étape d'acquisition d'historique de déformation consistant à mesurer la déformation d'une partie déformée de la tôle métallique dans un processus de déformation permettant de déformer plastiquement la tôle métallique et d'acquérir un historique de déformation de la déformation mesurée,
   **caractérisé en ce qu'**il comprend en outre :

   une étape de mise à jour séquentielle de contrainte consistant à calculer un incrément de contrainte de la partie déformée dans le processus de déformation selon un modèle constitutif de matériau en utilisant un incrément de contrainte acquis calculé à partir de l'historique de déformation et un incrément de contrainte supposé calculé, en supposant un état de déformation de la partie déformée, à partir d'une déformation autre que la déformation à partir de laquelle l'historique de déformation est acquis, et à mettre à jour séquentiellement la contrainte d'un début à une fin de déformation de la partie déformée en utilisant l'incrément de contrainte calculé ; et
   une étape de détermination de contrainte résiduelle consistant à déterminer, en tant que contrainte résiduelle de la partie déformée, la contrainte de la partie déformée à la fin de la déformation dans le processus de déformation parmi les contraintes mises à jour séquentiellement dans l'étape de mise à jour séquentielle de contrainte.

2. Procédé de calcul de la contrainte résiduelle selon la revendication 1, dans lequel, dans l'étape d'acquisition d'historique de contrainte, un historique de contrainte d'une contrainte dans deux directions dans le plan et une contrainte de cisaillement dans le plan au niveau de la partie déformée sont mesurés par un procédé de corrélation d'images numériques, et ces historiques de contrainte sont acquis.

3. Procédé de calcul de la contrainte résiduelle selon la revendication 1 ou 2, dans lequel, dans l'étape de mise à jour séquentielle de contrainte, l'état de déformation de la partie déformée est supposé à partir du processus de déformation de la partie déformée, et l'incrément de contrainte supposé est calculé sur la base d'une théorie de plasticité dans l'état de déformation supposé.

4. Procédé de calcul de la contrainte résiduelle selon la revendication 1 ou 2, dans lequel, dans l'étape de mise à jour séquentielle de contrainte, l'état de déformation de la partie déformée est supposé par analyse par éléments finis dans le processus de déformation de la tôle métallique, et l'incrément de contrainte supposé est calculé sur la base de l'état de déformation supposé.

# FIG.1

```
                    ( START )
                        │
                        ▼
┌─────────────────────────────────────────────┐
│        STRAIN HISTORY ACQUISITION STEP        │────── S1
└─────────────────────────────────────────────┘
                        │
                        ▼
┌─────────────────────────────────────────────┐
│        SEQUENTIAL STRESS UPDATING STEP        │────── S3
│   ┌─────────────────────────────────────┐     │
│   │  CALCULATE ACQUIRED STRAIN INCREMENT │──── S3a
│   └─────────────────────────────────────┘     │
│                     │                          │
│                     ▼                          │
│   ┌─────────────────────────────────────┐     │
│   │  CALCULATE ASSUMED STRAIN INCREMENT  │──── S3b
│   └─────────────────────────────────────┘     │
│                     │                          │
│                     ▼                          │
│   ┌─────────────────────────────────────┐     │
│   │      CALCULATE STRESS INCREMENT      │──── S3c
│   └─────────────────────────────────────┘     │
│                     │                          │
│                     ▼                          │
│   ┌─────────────────────────────────────┐     │
│   │      SEQUENTIALLY UPDATE STRESS      │──── S3d
│   └─────────────────────────────────────┘     │
│                     │                          │
│  NO                 ▼                          │
│  ◄──────◆   IS DEFORMATION   ◆───────────── S3e
│          ◆    COMPLETED?    ◆                 │
│               YES │                            │
└───────────────────┼────────────────────────────┘
                    ▼
┌─────────────────────────────────────────────┐
│      RESIDUAL STRESS DETERMINATION STEP       │────── S5
└─────────────────────────────────────────────┘
                    │
                    ▼
                 ( END )
```

# FIG.2

# FIG.3

# FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10089422 B2
- JP 2002333409 A
- JP 2011196953 A

**Non-patent literature cited in the description**

- **F. YOSHIDA** ; **T. UEMORI**. *International Journal of Mechanical Sciences*, 2003, vol. 45, 1687-1702